# EUROPEAN PATENT APPLICATION

(11) **EP 0 926 875 A1**
(43) Date of publication of application: **30.06.1999**
(21) Application number: 98310575.0
(22) Date of filing: 22.12.1998
(51) Int. Cl.: H04M 17/02, H04M 17/00, H04M 15/28

(54) **Access terminal with printer**

(30) Priority: 23.12.1997 US 996773
(71) Applicant: NORTHERN TELECOM LIMITED, Montreal, Quebec H2Y 3Y4 (CA)
(72) Inventor: Hillson, Andrew Raines, Calgary, Alberta T2Z 2K7 (CA); Chow, Alfred, Calgary, Alberta T3H 4N2 (CA); Lytle, Gregory John, Calgary, Alberta T2M 1S4 (CA)
(74) Representative: Cage, John David

(57) **Abstract**

A method and apparatus for providing information at a telephone. The method involves establishing a telephone call to a telephone services provider, answering the telephone call at the telephone services provider receiving a request for the information from the telephone at the telephone services provider during the telephone call, transmitting an information message from the telephone services provider to the telephone in response to the request during the telephone call, receiving the information message at the telephone, and, producing a user-readable representation of the information message at the telephone.

## Description

### FIELD OF THE INVENTION

This invention relates to a pay telephone with a printer which enables users to retrieve information from information service providers in graphical and printed form.

### BACKGROUND OF THE INVENTION

Pay telephones currently exist with a conventional two-line vacuum florescent display for displaying information about telephone calls. When a pay telephone is not in use, the conventional two-line display is often used to display or scroll text which may be used for advertising to attract a user to the telephone. The use of text-only information produces a rather uninteresting advertising format.

With the advent of the use of graphic displays in pay telephones, and with the use of the ADSI communications capabilities, advertising can be made more interesting. This type of advertising is also more effective in getting a message to the public.

In addition, telephone service providers such as the Talking Yellow Pages (tm) currently provide information in an audio format to users making requests of such services. Use of such services, however, is valuable to only those who are satisfied in receiving data in an audio format. However, some of such information may be presented rather quickly and can be difficult to write down, for example, exchange rate information or directory assistance information.

Users of public telephones frequently need a means of recording information provided by a Directory Assistance (DA) service, and there is a growing requirement for the user to make and retain a record of each call placed, for accounting and other purposes.

At best, the user is equipped with a pen or pencil and paper to make appropriate notes. However, some uses may record the information by means of a knife or other sharp object, thus causing damage to the telephone booth or worse. Other users will be forced to depend upon memory, which can result in the dialling of incorrectly remembered numbers and consequently, in unnecessary expenses.

There are situations where even a user equipped with pencil and paper will have difficulties, for example, perhaps when the number is given too quickly for the user.

### SUMMARY OF THE INVENTION

In accordance with one aspect of the invention, there is provided a method of providing information at a telephone. The method includes the steps of establishing a telephone call to a telephone services provider, answering a telephone call at a telephone service provider in response to the telephone call made from the telephone, transmitting to the telephone services provider a request for information, receiving a request for the information from the telephone at the telephone services provider during the telephone call, transmitting an information message from the telephone services provider to the telephone in response to the request, where the information message is transmitted during the telephone call, receiving the information message at the telephone, and, producing a user-readable representation of the information at the telephone.

In one aspect of the invention, the above problems are addressed by providing the user with a printed, hardcopy record containing the number provided by the DA service, the details of a call transaction, or of other information that may be appropriately submitted to or gathered by the telephone network, and subsequently delivered via the same means.

Preferably, the method includes the step of receiving a user-initiated request in response to user input received at the telephone.

Preferably, the method includes the step of receiving a request which includes the step of receiving DTMF signals from the telephone.

Preferably, the method includes the step of transmitting the information message in a pre-defined format including a message identifier and a representation of the information.

Preferably, the method includes the step of transmitting the information message in an FSK format.

Preferably, the method which includes the step of producing the user-readable representation includes the step of displaying the information on a graphical display at the telephone.

Preferably, the method includes the step of printing the information message on a printable medium.

Preferably, the method includes the step of reading the message identifier to determine the message type and executing a message handling routine associated with the message type.

Preferably, the method includes the step of loading into a print buffer print commands for controlling a printer.

Preferably, the method includes the step of receiving payment at the telephone for the use of the telephone services provider.

Preferably, the method includes the step of receiving payment authorization at the telephone for the use of the telephone services provider.

Preferably, the method includes the step of producing a call detail record relating to the telephone call.

In accordance with another aspect of the invention, there is provided a system for providing information using a public switched telephone network. The system includes a telephone services provider which includes an answering device for answering a telephone call, a request receiver for receiving a request for the information during the telephone call, and a transmitter for transmitting an information message in response to the request during the telephone call. The system further includes at least one telephone, which includes a user input device for receiving user input from a user of the telephone, a central office interface and a dialler for establishing a telephone call to the telephone services provider in response to user-input received at the user input device, a request message transmitter for transmitting to the telephone services provider a request for information, a message receiver for receiving the information message, and a user output device for providing a user-readable representation of the information message.

Preferably, the message receiver is operable to receive a user-initiated request in response to user input received at the telephone.

Preferably, the receiver includes a DTMF receiver for receiving DTMF signals from the telephone.

Preferably, the information message has a pre-defined format including a message identifier and a representation of the information.

Preferably the transmitter includes an FSK transmitter for transmitting the information message in an FSK format.

Preferably, the user output device includes a graphical display for displaying the information.

Preferably, the user output device includes a printer for printing the user-readable representation on a printable medium.

Preferably, the system includes a processor programmed to read a message identifier in the information message to determine the message type and programmed to execute a message handling routine associated with the message type.

Preferably, the system includes a print buffer and the processor is programmed to load a print buffer for directing the printer to print the user-readable representation.

Preferably, the processor is programmed to produce print commands for directing the printer to produce a call detail record.

Preferably, the call detail record includes information relating a telephone call made with the telephone.

Preferably, the system includes a payment receiver for receiving payment at the telephone for the use of the telephone services provider.

Preferably, the system includes a payment authorization receiver for receiving payment authorization at the telephone for the use of the telephone services provider.

In accordance with another aspect of the invention, there is provided a method of providing information at a telephone. The method includes the steps of establishing a telephone call to a telephone services provider, transmitting to the telephone services provider a request for information, during the telephone call, receiving an information message in response to the request, where the information message being transmitted during the telephone call, and producing a user-readable representation of the information message at the telephone.

Preferably, the method includes the step of displaying the information message on a graphical display at the telephone.

Preferably, the method which includes the step of providing the user-readable representation includes the step of printing the user-readable representation on a printable medium.

Preferably, the method includes the step of reading a message identifier in the information message to determine the message type and executing a message handling routine associated with the message type.

Preferably, the method which includes the step of printing includes the step of loading into a print buffer print commands for controlling the printer.

Preferably, the method includes the step of producing a call detail record relating to the telephone call.

Preferably, the method includes the step of receiving payment at the telephone for the use of the telephone services provider.

Preferably, the method includes the step of receiving payment authorization at the telephone for the use of the telephone services provider.

In accordance with another aspect of the invention, there is provided an apparatus for providing information at a telephone. The apparatus includes a central office interface and a dialler for establishing a telephone call to a telephone services provider, a request message transmitter for transmitting to the telephone services provider a request for the information, during the telephone call, an information receiver for receiving an information message in response to the request where the information message is received during the telephone call, and, an output device for providing a user-readable representation of the information message at the telephone.

Preferably, the output device includes a graphical display for displaying the user-readable representation.

Preferably, the output device includes a printer for printing the user-readable representation on a printable medium.

Preferably, the apparatus includes a processor programmed to read a message identifier in the information message to determine a message type and programmed to execute a message handling routine associated with the message type.

Preferably, the processor is programmed to produce print commands for directing the printer to print the information message.

Preferably, the processor is programmed to produce print commands for directing the printer to produce a call detail record.

Preferably, the call detail record includes call information relating a telephone call made with the telephone.

Preferably, the apparatus includes a payment receiver for receiving payment at the telephone for the use of the telephone services provider.

Preferably, the apparatus includes a payment authorization receiver for receiving payment authorization at the telephone for the use of the telephone services provider.

### BRIEF DESCRIPTION OF THE DRAWINGS

In drawings which illustrate embodiments of the invention,
Figure **1** is a block diagram of a system according to a first embodiment of the invention;
Figure **2** is a block diagram of a telephone apparatus according to the first embodiment of the invention;
Figure **3** is a schematic representation of a random access memory configuration, according to the first embodiment of the invention;
Figure **4** is a schematic representation of a flash memory configuration, according to the first embodiment of the invention;

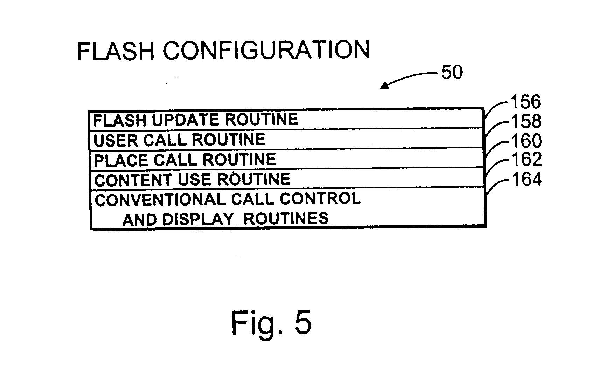

Figure **5** is a schematic diagram of routines stored in program files in the flash memory shown in Figure **4**;
Figure **6** is flowchart of a flash update routine, according to the first embodiment of the invention;
Figure **7** is a flowchart of a user call routine, according to the first embodiment of the invention;
Figure **8**a is a flowchart of a place call routine, according to a first embodiment of the invention;

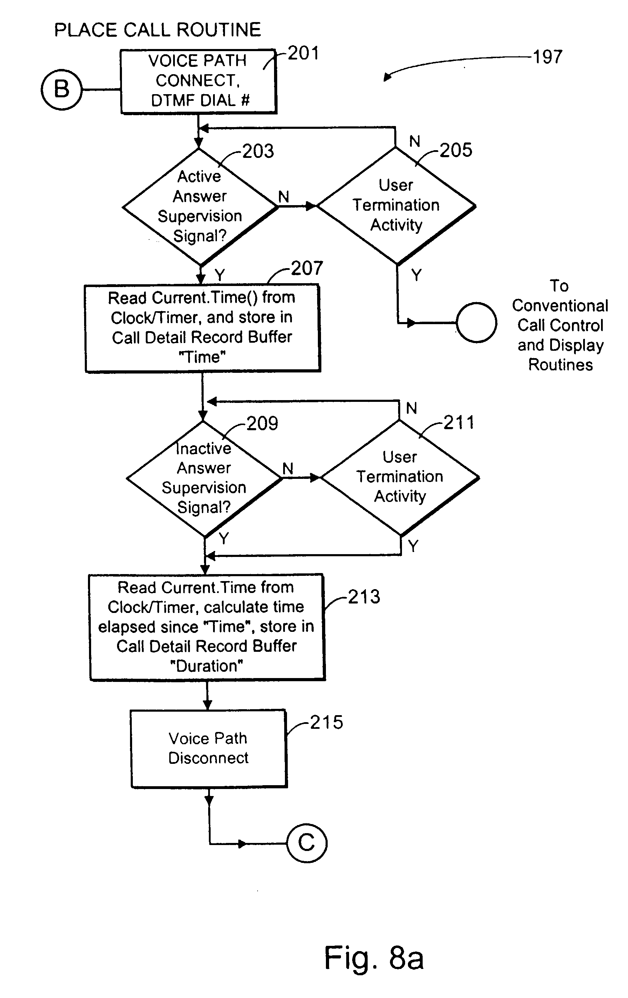

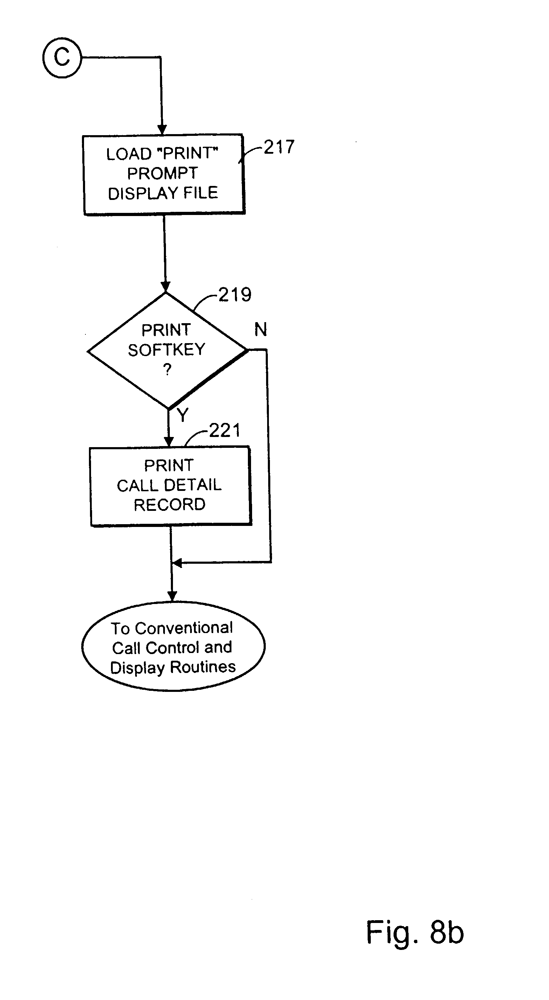

Figure **8**b is a continuation of Figure **8**a;

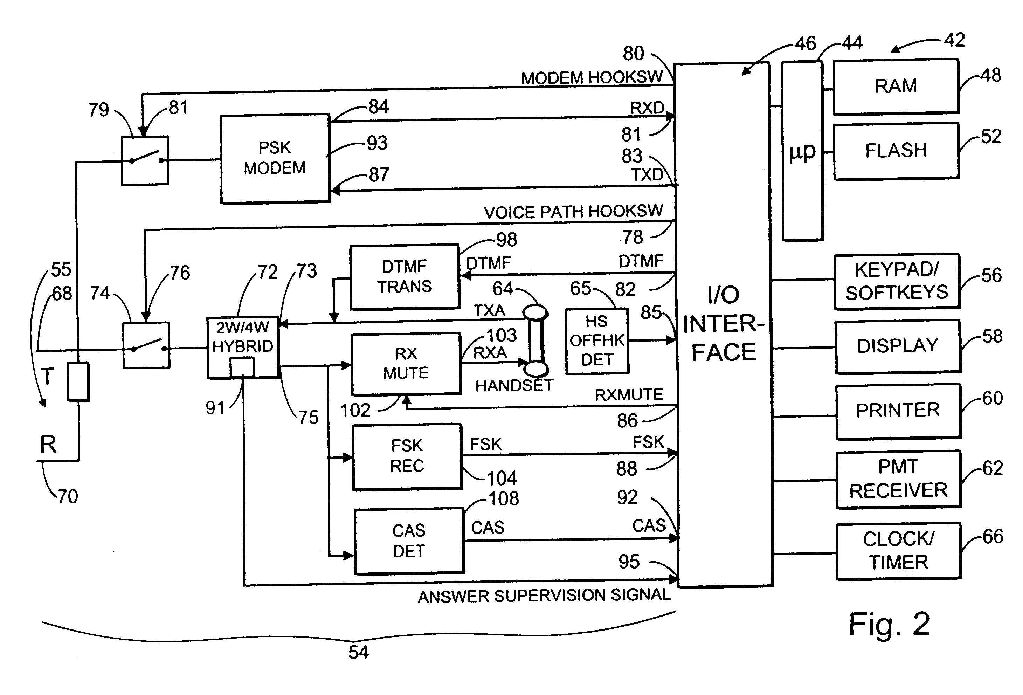

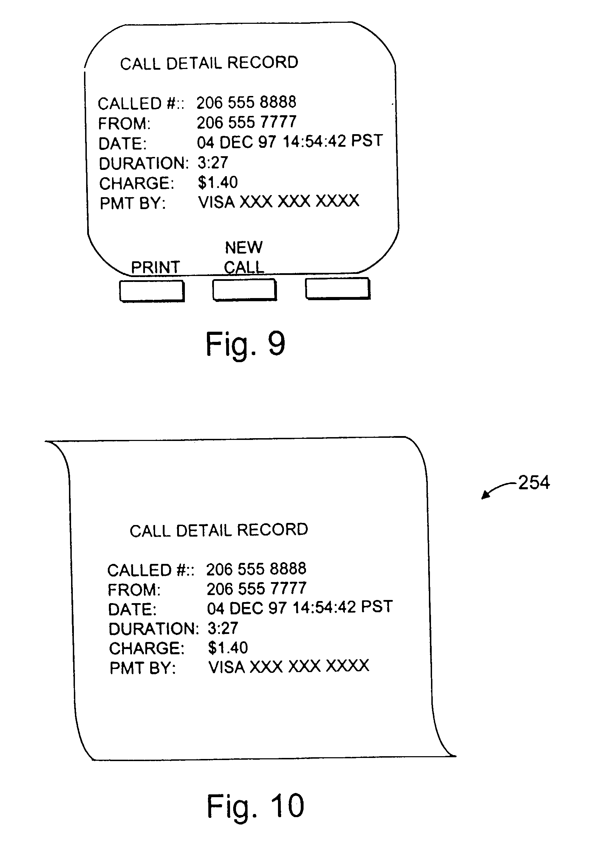

Figure **9** is a pictorial representation of a call detail record graphic image produced on a display of the apparatus shown in Figure **2**;
Figure **10** is a sample call detail record printed by a printer of the apparatus shown in Figure **2**;

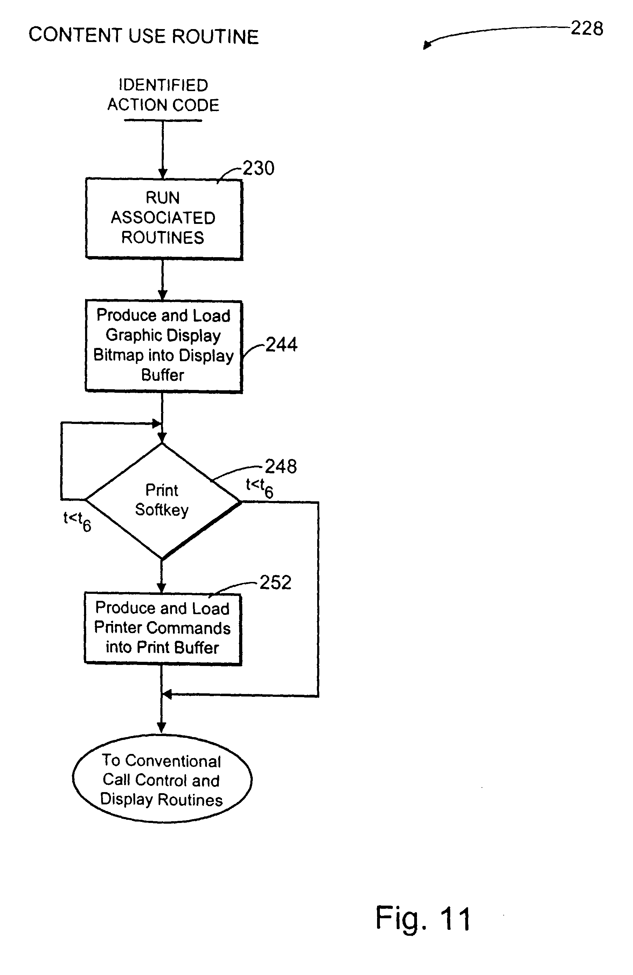

Figure **11** is a flowchart of a content use routine, according to the first embodiment of the invention;

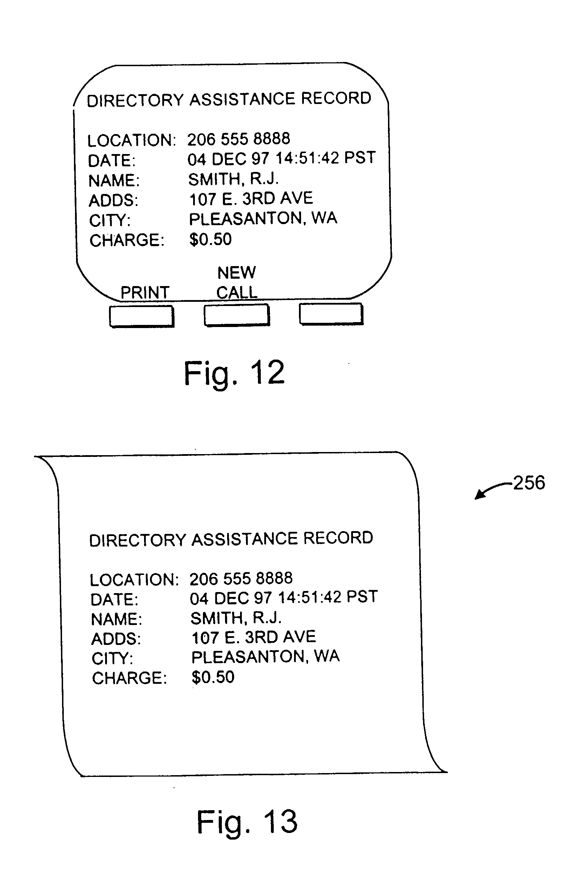

Figure **12** is a pictorial representation of a graphic display of a directory assistance record produced by the apparatus shown in Figure **2**; and
Figure **13** is a pictorial representation of the printed directory assistance record printed by the apparatus shown in Figure **2**.

### DETAILED DESCRIPTION

### Figure 1

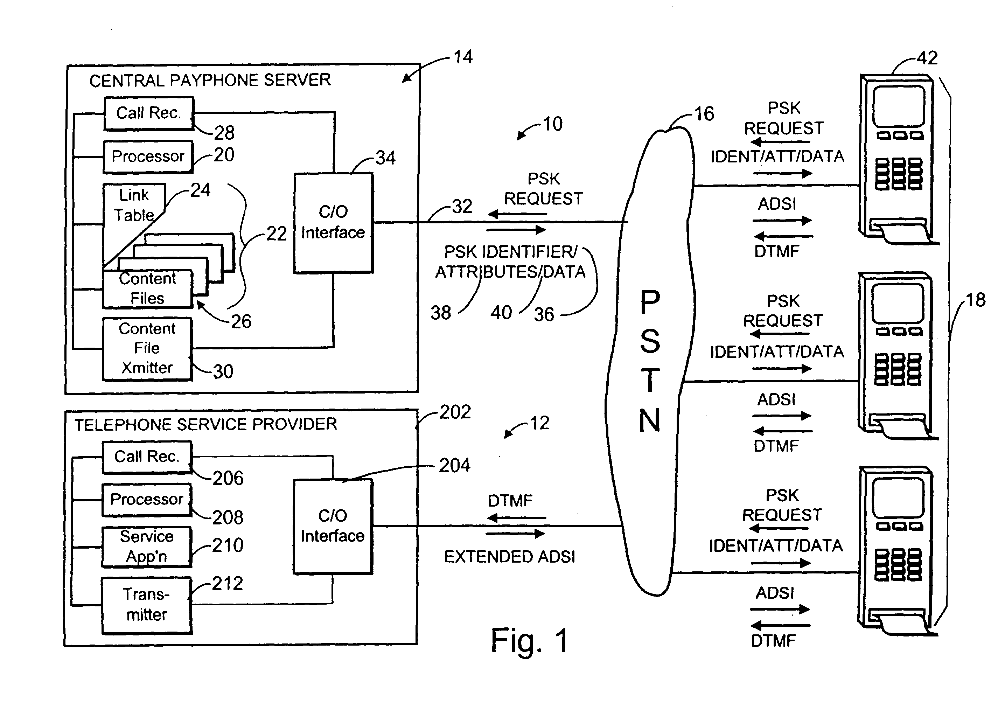

Referring to Figure **1**, a system for providing graphical content to a plurality of graphical display pay telephones is shown generally at **10**. In addition, a system for providing telephone information services by telephone, using a public switched telephone network, is shown generally at **12**.

The system **10** includes a telephone service provider which, in this embodiment, is a central payphone server **14**, a public switched telephone network (PSTN) **16** and a plurality of graphical display telephones shown generally at **18**. Both the central payphone server **14** and each of the plurality of telephones **18** is operable to communicate with each other via the public switched telephone network **16**.

The central payphone server **14** includes a processor **20** which is connected to memory shown generally at **22** structured to include a link table **24**, content files **26** including graphical files and rate tables. In addition, the processor is in communication with a call receiver **28** and a content file transmitter **30**. The call receiver **28** and the content file transmitter **30** are operable to receive and transmit PSK data over a subscriber loop **32** through a central office line interface **34**.

The processor **20** is operable to receive from an external source, not shown, separate graphical content files **26** for each respective telephone of the plurality of telephones **18**. Thus, each telephone is associated with a corresponding set of graphical content files and rate table files. The processor uses the link table to establish correlations of graphical content files and rate table files with individual telephones of the plurality of telephones **18**.

The call receiver **28** receives PSK signals from the central office line interface **34**, such PSK signals being interpreted as requests for specific content files from the memory **22**. In response to such requests, the processor **20** retrieves a content file as determined from the link table **24** and transmits the content file using the content file transmitter **30** through the central office line interface **34**, as a phase shift keyed (PSK) information message. The PSK message includes an identifier field **36**, an attribute field **38** and a data field **40**. The identifier field **36** identifies the message as a graphical or rate table message, the attribute field **38** identifies certain attributes of graphical files such as time for display, effective date of display, etc. and the data field in the case of graphical files includes a bit map file for controlling pixels on a display of the telephone which sent the PSK request message. In the case of rate table files, the data field includes rate information associated with the requesting telephone. The public switched telephone network conveys the PSK message to the requesting telephone, telephone **42** for example.

### Figure 2

Referring to Figure **2**, the telephone includes a processor**44** in communication with an input/output (I/O) interface **46**, Random Access Memory (RAM) **48**, and flash memory **52**. The I/O interface **46** is in communication with a central office line interface shown generally at **54**, a keypad soft key interpreter **56**, a display **58**, a printer **60**, a payment receiver **62**, a handset **64**, and a clock timer **66**.

The I/O interface **46** has a modem hookswitch output **80**, a Receive Data (RXD) input **81**, a Transmit Data (TXD) output **83**, a voice path hookswitch output **78**, a DTMF output **82**, a handset offhook detect input **85**, an RX mute output **86**, an FSK input **88** a CAS input **92**, and an answer supervision signal input **95**.

The central office line interface **54** interfaces the I/O interface **46** with a central office line **55**. The central office line interface includes a PSK modem **93** and a PSK modem hookswitch **79**. The PSK modem hookswitch **79** is connected to tip and ring terminals **68** and **70** and is operable to connect the PSK modem **93** for communication through the central office line **55**. The PSK modem hookswitch **79** has a control input **81** connected to the modem hookswitch output **80** such that the I/O interface is operable to control the connection of the PSK modem **93** to the central office line **55**. The PSK modem has a receive signal output **84** and a transmit signal input **87** which are connected to the RXD input **81** and TXD output **83** respectively of the I/O interface to facilitate reception and transmission of data using the PSK modem **93**.

The central office line interface **54** further includes a voice path hookswitch **74**, a **2**-wire to **4**-wire hybrid **72**, a DTMF transmitter **98**, an RX mute circuit **102**, a handset **64**, a handset offhook detector **65**, an FSK receiver **104** and a CAS detector **108**. The voice path hookswitch **74** is operable to connect the **2**-wire to **4**-wire hybrid **72** to the central office line. The voice path hookswitch **74** has a control input **76** which is connected to the voice path hookswitch output **78** which allows the processor to control the voice path hookswitch through the I/O interface **46**. The **2**-wire to **4**-wire hybrid has a voice transmit input **73** and a receive output **75**. The DTMF transmitter **98** receives signals from the DTMF output **82** which cause it to present DTMF tones to the transmit signal input **73** for transmission over the central office line **55** under control of the processor **44**. The handset **64** is also operable to produce voice transmit signals which are received at the input **73**, also for transmission over the central office line **55**.

The receive output **75** is connected to the receive mute circuit **102** and the receive (RX) mute circuit has an output **103** which provides a receive signal to the handset **64**. The RX mute circuit is controlled by the RX mute output **86** of the I/O interface to selectively mute and unmute the receive path between the **2**-wire to **4**-wire hybrid and the handset **64**.

The hybrid **72** includes an answer supervision circuit **71** which produces an active answer supervision signal to the answer supervision signal input **95** on the I/O interface **46**.

The handset offhook detector **65** provides an active handset offhook detect signal to the handset offhook detect input **85** when the user lifts the handset **64** off of a cradle (not shown).

The FSK receiver is connected to receive signals from the receive output **75** and to present data representing FSK transmissions so received to the FSK input **88** at the I/O interface **46**.

The CAS detector **108** is connected to the **2**-wire to **4**-wire hybrid **72** to receive signals from the receive output **75**. The CAS detector **108** produces an active CAS detect signal which is applied to the CAS input **92** of the I/O interface. The CAS detect signal is rendered active when a caller alerting signal (CAS) is received from the central office.

The keypad soft key interpreter **56** provides signals to the processor **44** indicative of keys pressed on a dial keypad of the telephone or on softkeys adjacent the display **58**. The keypad softkey interpreter **56** thus acts as a user input device for receiving user input from a user of the telephone.

The display is a **3** inch by **4** inch pixel-addressabledisplay.

The printer **60** is a small receipt type printer similar to that found on cash registers.

The payment receiver **62** is a hybrid credit card and smart card receiver, in this embodiment, and includes credit card validation software and hardware, etc., and credit card reading apparatus for reading a credit or IC-based smart card. Effectively, the payment receiver **62** renders a payment signal active when a valid credit card (not shown) has been inserted into the credit card reader (not shown) and the credit card has been validated. The apparatus thus includes a payment authorization receiver for receiving payment authorization at the telephone for the use of the telephone services provider.

The handset **64** is conventional and allows the user to send and receive voice signals in the usual manner over the central office line.

The clock timer **66** provides time of day information, date information and timing information to the processor **44**.

### Figure 3

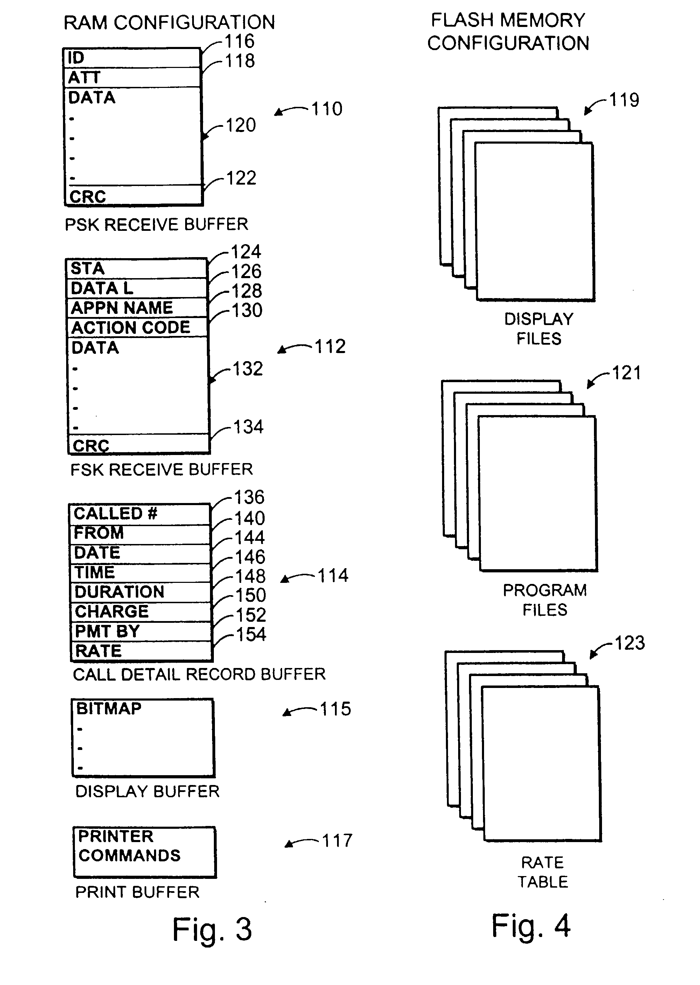

Referring to Figure **3**, the RAM is configured to include a PSK receive buffer **110**, an FSK receive buffer **112**, a call detail record buffer **114**, a display buffer **115** and a pnnt buffer **117**.

The PSK receive buffer includes an identification register **116**, an attribute register **118**, a plurality of data registers shown generally at **120** and a cyclic redundancy check register **122**. The PSK receive buffer is used to receive and store messages received at the PSK modem **93** shown in Figure **2**.

Referring back to Figure **3**, the FSK receive buffer **112** includes a switch to application (STA) register **124**, a data link register **126**, an application name register **128**, an action code register **130**, a plurality of data registers shown generally at **132** and a CRC register **134**. The FSK receive buffer is used to receive and store messages received at the FSK receiver **104** shown in Figure **2**.

Referring back to Figure **3**, the call detail record buffer **114** includes a called number register **136,** a from register **140**, date and time registers **144** and **146**, a duration register **148**, a charge register **150**, a payment by register **152** and a rate register **154**. The call detail record buffer **114** is used to store call detail information compiled in response to a telephone call made from the pay telephone.

The display buffer **115** is used to hold a bit map of a graphic image for presentation on the display **58** shown in Figure **2**.

Referring back to Figure **3**, the print buffer **117** is used to assemble and hold print commands for driving the printer **60** to print a message or the like.

### Figure 4

Referring to Figure **4**, the flash memory is configured to include a display file buffer **119** a program file buffer **121** and a rate table buffer **123**. The display file buffer **119**, program file buffer **121** and rate table buffer **123** are loaded from data accumulated from the data registers **132** in the FSK receive buffer shown in Figure **3**. The display files are loaded into the display buffer under the control of program files **121**.

### Figure 5

Referring to Figure **4**, the program file buffer **121** is preloaded with program codes readable by the processor **44** for directing the processor to execute various routines for effecting various functions of the telephone. Such codes direct the processor to execute a flash update routine **156**, a user call routine **158**, a place call routine **160**, a content use routine **162** and conventional call control and display routines **164**.

### Figure 6

### Flash Update Routine

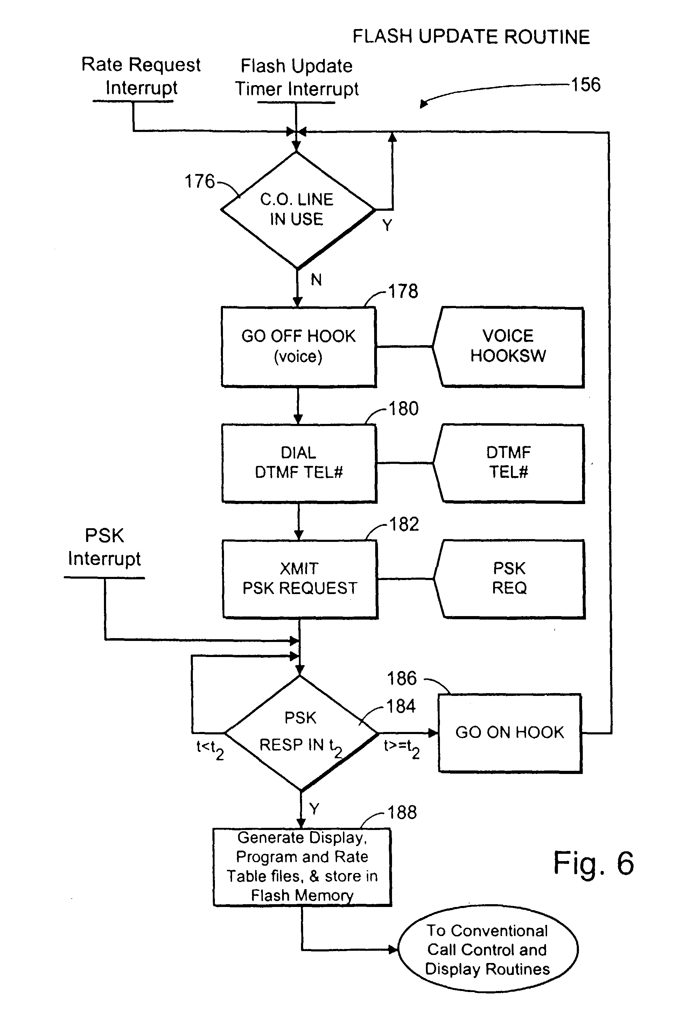

Referring to Figures **2** and **6**, the flash update routine is shown generally at **156** and is run on a periodic basis, in this embodiment, once every **24** hours. The flash update routine begins with a first block **176** which directs the processor to determine whether or not the telephone is in use. This is done by determining the state of the voice path hookswitch output **78**, which is set to connect the telephone to the central office line **55**, according to the conventional call control routines when a user is using the telephone.

If at block **176**, the telephone is in use, the flash update routine continues to direct the processor to execute block **176** to continually determine whether or not the telephone is in use. When the telephone is no longer in use, block **178** directs the processor to set the voice path hookswitch output **78** active to connect the telephone to the central office line **55**. Block **180** then directs the processorto activate the DTMF output **82** to cause the DTMF transmitter **98** to transmit DTMF signals representing a telephone number of the central payphone server **14** shown in Figure **1**.

Referring back to Figures **2** and **6**, block **182** then directs the processor to set the modem hookswitch output **80** active to close the modem hookswitch to connect the PSK modem to the central office line **55**. The voice path hookswitch output **78** is then set inactive to open the voice path hookswitch **74** to disconnect the DTMF transmitter **98** from the central office line **55**. The TXD output **83** is then activated with request data representing a request message. In response, the PSK modem transmits a PSK request signal to the central payphone server **14** through the PSTN **16**.

Block **184** then directs the processor to determine whether or not a PSK response has been received from the central payphone server within a predefined time period, t₂, at the PSK modem **93**.

PSK data is received at the PSK modem **93** and is stored in the PSK receive buffer **110** shown in Figure **3** such that identification information is stored in the identification buffer, attribute information is stored in the attribute register **118**, graphical data is stored in the data registers **120** and cyclic redundancy check (CRC) information is stored in the CRC register **122**. The processor then calculates a CRC of its own on the contents of the identification register **116**, attribute register **118** and data registers **120** and compares the calculated CRC against the contents of the CRC register **122**. When the contents match, a PSK response is, for the purposes of block **184**, deemed to have occurred. If a valid CRC is not calculated within a second time T₂, block **186** directs the processor to set the modem hookswitch output **80** inactive thereby disconnecting the telephone from the central office line **55** and aborting the call. The flash update routine is, however, restarted at block **176**. Thus, the flash update routine persists until PSK response data is received.

When PSK data is deemed to have been received at block **184**, the processor is directed to block **188** which directs it to generate display files, program files or rate tables using the contents of the data registers **120** and to store such display files, program files or rate tables in corresponding buffers shown at **119**, **121** and **123** in Figure **4**. The display files are produced in a bit map format, so they can merely be copied directly into the display buffer **115** under the control of program files **121**. The display files control individual pixels on the display **58** according to conventional display routines.

The program files are in a format readable by the processor **44** and are able to direct the processor to execute desired algorithms.

The rate tables are in a format readable by the processor **44** and are used to determine a rate to be used for calculating charges for caller placed to various numbers.

After executing block **188** of the flash update routine, this routine is completed.

### Figure 7

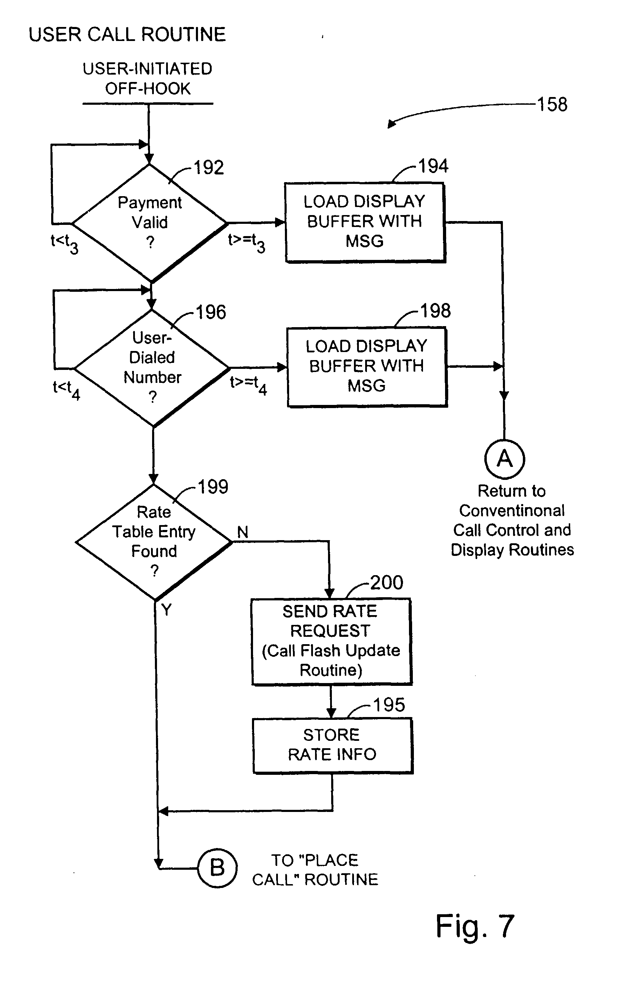

Referring to Figure **7**, the user call routine is shown generally at **158**. This routine is entered upon the user lifting the handset, which according to the conventional call control routines, renders the handset offhook signal active. Block **192** then directs the processor to determine whether or not a valid payment signal has been received from the payment receiver **62**. The processor remains at block **192** until such valid payment signal is active and if such signal does not become active with a predefined time period, t₃, block **194** directs the processor to load the display buffer **115** with a display file requesting the user to try again and the processor is directed to return to the conventional call control and display routines **164**. Otherwise, if a valid payment signal is detected, the processor is directed to block **196** where it waits for the user to place a call. The user is deemed to have placed a call when a valid telephone number has been dialled on the keypad soft key interpreter **56**. The conventional telephone routines provide a flag signal (not shown) indicating whether or not the user has properly entered a valid telephone number.

If at block **196**, the user has not placed a call within a time T₄, block **198** directs the processor to load the display buffer with a display file from the display file buffer **119**, indicating that a call has not been properly placed and the processor is directed to return to the conventional call control and display routines.

If at block **196**, the user has dialled a valid telephone number, the processor is directed to block **199** which directs the processor to search the rate table buffer **123** for a rate table entry applicable to the number dialled by the user.

If at block **199**, no applicable rate table entry is found, the processor is directed to block **200** which directs it to send it a rate request to the central payphone server **14**. This rate request is made by directing the processor to execute the flash update routine shown in Figure **6** whereupon the PSK request transmitted at block **182** is a request for rate information. It will be recalled that after executing the flash update routine, the PSK receive buffer is loaded with data, in this instance, representing rate table information.

Referring back to Figure **7**, upon completion of the flash Update Routine called from the user call routine, the processor is directed to block **195** which directs it to store the appropriate rate data for the call, as found in the located rate table, in the rate register **154**. In addition, the processor is directed to load the called number register **136** with the number dialled by the user. In addition, the telephone number of the pay telephone used by the user is stored in the "from" register **140**. Finally, the processor is also directed to load an indication of the type of payment (eg. coin, smart card, credit card) and account number, if applicable, into the "payment by" register **152**.

The processor is then directed to the place call routine shown in Figure **8**.

### Figure 8

The Place Call routine is shown generally at **197** in Figure **8**. This routine begins with a first block **201** which directs the processor to set the voice path hookswitch output **78** active thereby closing the voice path hookswitch **74** and connecting the voice path defined by input **73** and output **75** to the central office line. Thus, the processor and central office line interface act in conjunction with the DTMF transmitter which acts as a dialler for establishing a telephone call to the telephone services provider, in response to user-input received at the user input device. Still within block **201**, the processor then controls the DTMF output **82** to cause the DTMF transmitter **98** to transmit the telephone number dialled by the user, over the central office line.

After the number is dialled, block **203** directs the processor to wait for an active answer supervision signal to be received at the answer supervision signal input **95**, from the **2**-wire to **4**-wire hybrid **72**. Until such signal is received, the processor executes block **205** which directs it to test for call termination hookswitch activity caused by the user hanging up the handset. Such user activity may occur as a result of an abandoned call, for example. If user activity occurs, the processor is directed to abort the place call routine and return to the conventional call, control and display routines **164**.

If, at block **205**, no such user activity is detected and an active answer supervision signal is received at block **203**, the processor is directed to block **207**.

Block **207** directs the processor to read the clock timer **66** to determine a current date and time from the clock timer **66**. The current date and time values are stored in the date and time registers **144** and **146** of the call detail record buffer **114**.

The processor is then directed to block **209** where it is directed to wait for an inactive answer supervision signal from the **2**-wire to **4**-wire hybrid **72**. If no such inactive answer supervision signal has been received, the processor is directed to block **211** where it tests for user activity including call termination hookswitch activity caused by the user hanging up the handset or user activity in the form of keypad or softkey presses at the keypad soft key interpreter **56**. If call termination activity occurs at block **211**, or if an inactive answer supervision signal is received at block **209**, the processor is directed to block **213**.

Block **213** directs the processor to again read the clock timer **66**, this time to determine a new time value only. The processor then uses the presently obtained time value with the previously obtained time value as stored in the time register **146**, to determine the duration of the call. The duration of the call is then stored in the duration register **148**. The processor then uses the date, time and duration values in conjunction with the data stored in the rate register **154**, to determine a charge value to be stored in the charge register **150**. The charge value represents the cost of the call or the amount the user will be billed. The loading of the call detail record is thus completed in connection with the call just completed by the user.

The processor is then directed to block **215**, where it sets the voice path hookswitch output **78** inactive thereby opening the voice path hookswitch **74** and disconnecting the telephone from the central office line **55**.

Referring to Figure **8b**, block **217** then directs the processor to load into the display buffer **115**, a display file from the display file buffer **119**, the display file including a prompt message which is displayed on the display **58** as shown in Figure **9**.

The processor is then directed to block **219** where it waits for the user to press a key on the keypad or softkeys as received at the keypad soft key interpreter **56** shown in Figure **2**. If the user fails to press a keypad or softkey within a predefined period of time, the processor is returned to the conventional call control and display routines **164**.

If, however, at block **219**, the user activates a key at the keypad soft key interpreter **56**, block **221** directs the processor to load from the program file buffer **121**, an appropriate printer driver into the print buffer **117** which directs the printer to print a call detail record including the contents of registers **136** through **154** stored in the called detail record buffer. Such a record is shown generally at **254** in Figure **10**. Thus, the processor is programmed to produce print commands for directing the printer to produce a call detail record and the call detail record includes information relating a telephone call made with the telephone.

Referring back to Figure **8**, if at block **209**, the user has called and connected to a telephone service provider as shown at **202** in Figure **1**, such provider may prompt the user, using voice, to enter **1** or **2** etc. to select certain options. For example, if the telephone services provider is a directory assistance centre, the user may be prompted to speak or enter the name of the city of the party he/she wishes to call. Spoken responses are transmitted from the payphone as conventional voice signals. Responses entered through the keypad are transmitted from the payphone as DTMF signals using the DTMF transmitter **98**. Thus, the DTMF transmitter acts as a request message transmitter for transmitting to the telephone services provider a request for information, during the telephone call.

The telephone services provider **202** receives the voice response or DTMF signals at a central office interface **204** and provides signals to a call receiver **206**. The call receiver acts as an answering device for answering a telephone call and communicates the response to a processor **208** which interprets the response, accesses an appropriate service application **210** and forwards information requested by the user to a transmitter **212**. The transmitter formats the information into an extended ADSI message having an action code identifying the ADSI message as relating to directory assistance and data representing the information requested by the user. Thus, the information message has a pre-defined format including a message identifier and a representation of the information. Thus, the processor acts as a request receiver for receiving a request for the information during the telephone call and the transmitter transmits an information message in response to the request, during the telephone call. In addition, the processor acts as a request receiver operable to receive a user-initiated request in response to user input received at the telephone and the call receiver acts as a DTMF receiver for receiving DTMF signals from the telephone.

In accordance with the ADSI standard, the transmission of an ADSI message is preceded by a CAS tone which is detected by the CAS detector **108**, which renders a CAS signal active. The transmitter includes an FSK transmitter for transmitting the information message in an FSK format. This signal is received at the CAS input **92** of the I/O interface **46** and directs the processor **44** to execute a conventional ADSI message receive routine not shown but contained in the conventional call control and display routines to provide the required CAS response sequence, muting and unmuting of the receive path and reception and storage of the ADSI message in the FSK receive buffer **110** shown in Figure **3**. Thus, the FSK receive buffer acts as a message receiver for receiving an information message.

### Figure 11

After an ADSI message is received in the FSK receive buffer, the processor is directed to run the content use routine shown at **228** in Figure **11**.

Referring to Figure **11**, the content use routine **228** begins with a first block **230** which directs the processor **208** to run executable routines, stored in the program files buffer **121**, associated with the action code stored in the action code register **130**. In the example presented, the action code relates to directory assistance information, so any executable routines associated with directory assistance activities are executed. Thus, the apparatus includes a processor programmed to read a message identifier in the information message to determine the message type and programmed to execute a message handling routine associated with the message type.

Upon completion of block **230**, the processor is directed to block **244** which directs it to produce and load a graphic display, including the contents of the data registers **132**, into the display buffer **115** shown in Figure **3**. Thus, the display buffer **115** is loaded with a bit map including variables from the ADSI message received from the telephone services provider **202**, and the conventional call control and display routines produce an image on a graphical display as shown in Figure **14**. Thus, the display **58** acts as a user output device for providing a user-readable representation of the information message on a printable medium.

Referring back to Figure **11**, block **248** then directs the processor **208** to read the keypad softkey input on the I/O interface **46** to determine whether or not the user has activated a print softkey. If the user has not activated the print softkey within a prespecified period of time T₆, the processor is returned to the conventional call control and display routines. Thus, the display is returned to its original state as it was before the user made the call.

If at block **248**, the user has activated the print softkey, block **252** directs the processor to run a printer driver associated with the action code to load the print buffer **117** shown in Figure **3** with printer commands which activate the printer to print a directory assistance record as shown generally at **256** in Figure **13**, using the data stored in the data registers **132** of the FSK receive buffer **112**. Thus, the apparatus includes a print buffer and the processor is programmed to load the print buffer for directing the printer to pnnt the user-readable representation. Thus, the printer also acts as a user output device for providing a user-readable representation of the information message on a printable medium.

In this manner, a user of a directory assistance provider can receive a printed record providing the telephone number of the party he/she wishes to call.

It will be appreciated that other telephone services providers such as e-mail providers, joke of the day, horoscope and the like can also provide information to one of the plurality of telephones **18** for display in graphical format or for printout.

Alternatively, voice recognition and conventional Interactive Voice Response (IVR) technologies may be used as alternatives to keypad or push buttons for user input.

In summary, a method and apparatus provides information at a telephone. The method involves establishing a telephone call to a telephone services provider, answering the telephone call at the telephone services provider receiving a request for the information from the telephone at the telephone services provider during the telephone call, transmitting an information message from the telephone services provider to the telephone in response to the request during the telephone call, receiving the information message at the telephone, and, producing a user-readable representation of the information message at the telephone.

### Operation

While specific embodiments of the invention have been described and illustrated, such embodiments should be considered illustrative of the invention only and not as limiting the invention as construed in accordance with the accompanying claims.

## Claims

1. A method of providing information at a telephone, the method comprising the steps of:
a) establishing a telephone call to a telephone services provider;
b) answering a telephone call at a telephone services provider in response to said telephone call made from said telephone;
c) transmitting a request message to said telephone services provider;
d) receiving a request for said information, from said telephone, at said telephone services provider, during said telephone call;
e) transmitting an information message from said telephone services provider to said telephone in response to said request, said information message being transmitted during said telephone call;
f) receiving said information message at said telephone; and
g) producing a user-readable representation of said information message at said telephone.

2. A method as claimed in claim **1** wherein the step of receiving a request includes the step of receiving a user-initiated request in response to user input received at said telephone.

3. A method as claimed in claim **1** or **2** wherein the step of receiving a request includes the step of receiving DTMF signals from said telephone.

4. A method as claimed in claim **1** wherein the step of transmitting an information message further includes the step of transmitting said information message in a pre-defined format including a message identifier and a representation of said information.

5. A method as claimed in claim **1** wherein the step of producing said user-readable representation includes the step of displaying said information on a graphical display at said telephone.

6. A method as claimed in any preceding claim wherein the step of producing said user-readable representation includes the step of printing said information message on a printable medium.

7. A method as claimed in claim **4** further including the step of reading said message identifier to determine the message type and executing a message handling routine associated with said message type.

8. A method as claimed in claim **6** wherein the step of printing includes the step of loading into a print buffer print commands for controlling the printer.

9. A method as claimed in any preceding claim further including the step of receiving payment at said telephone for the use of said telephone services provider.

10. A method as claimed in any preceding claim further including the step of receiving payment authorization at said telephone for the use of said telephone services provider.

11. A method as claimed in any preceding claim further including the step of producing a call detail record relating to said telephone call.

12. A system for providing information using a public switched telephone network, the system comprising:
a) telephone services provider including:
i) an answering device for answering a telephone call;
ii) a request receiver for receiving a request for said information during said telephone call;
iii) a transmitter for transmitting an information message in response to said request, during said telephone call;
b) at least one telephone, said at least one telephone including:
i) a user input device for receiving user input from a user of said at least one telephone;
ii) a central office line interface and a dialler for establishing a telephone call to said telephone services provider, in response to user-input received at said user input device;
iii) a request message transmitter for transmitting a request message to the telephone services provider;
iv) a message receiver for receiving said information message; and
v) a user output device for providing a user-readable representation of said information message.

13. A method of providing information at a telephone, the method comprising the steps of:
a) establishing a telephone call to a telephone services provider;
b) transmitting to said telephone services provider a request for said information, during said telephone call;
c) receiving an information message in response to said request, said information message being transmitted during said telephone call; and
d) producing a user-readable representation of said information at said telephone.

14. An apparatus for providing information at a telephone, the apparatus comprising:
a) a central office line interface and a dialler for establishing a telephone call to a telephone services provider;
b) a request message transmitter for transmitting to said telephone services provider a request for said information, during said telephone call;
c) an information receiver for receiving an information message in response to said request, said information message being received during said telephone call;
d) an output device for providing a user-readable representation of said information message, at said telephone.

15. A telephone, comprising:
a data mechanism capable of receiving information while voice communication through a voice connection is achievable; and
a printer coupled to the data mechanism, the printer being operable to print information in response to the information received by the data mechanism.

16. The telephone according to claim 15, wherein the information received by the data mechanism arrives from a data connection separate from the voice connection.

17. The telephone according to claim 15, wherein the information received by the data mechanism is received through the voice connection.

18. A method of printing information using a telephone, the method comprising the steps of:
initiating a voice connection using the telephone;
the telephone receiving information while allowing voice communication through the voice connection to be achievable; and
the telephone printing information in response to the information received.

19. A method of printing information using a telephone, the method comprising the steps of:
initiating a telephone call using the telephone;
transmitting a request message using the telephone;
receiving an information message at the telephone in response to the request message; and
producing a user-readable representation of the information message using the telephone.

20. A method of providing information to a telephone as set forth in claim 19, wherein said producing a user-readable representation of the information message using the telephone further includes printing the user-readable representation of the information message using the telephone.

21. A telephone, comprising:
a communication mechanism for communicating information;
a pay mechanism coupled to the communication mechanism for enabling such communicating; and
a printer coupled to the communication mechanism capable of printing information in response to information communicated by the communication mechanism.

22. The telephone as set forth in claim 21, wherein the printer is integrated within the telephone.

23. The telephone as set forth in claim 21, further comprising a voice mechanism for enabling voice communications.

24. The telephone as set forth in claim 23, where the voice mechanism is a handset.

25. The telephone as set forth in claim 21, further comprising a display mechanism for displaying graphical information.

26. A telephone, comprising:
a pay mechanism for enabling communication;
a graphical display mechanism responsive to said communication for enabling graphical display of information associated therewith; and
a printer responsive to said communication for printing information associated therewith.
